# EUROPÄISCHE PATENTSCHRIFT

(11) **EP 0 844 428 B1**
(45) Veröffentlichungstag und Bekanntmachung des Hinweises auf die Patenterteilung: **20.09.2000**
(21) Anmeldenummer: 97118793.5
(22) Anmeldetag: 29.10.1997
(51) Int. Cl.: F16L 23/026, F01N 7/18

(54) **Fügeverbindung eines abgasführenden Rohres mit einem Befestigungsflansch und ein Verfahren zur Herstellung derselben**
Connection of an exhaust gas pipe with a mounting flange and method of making the same
Connexion d'une conduite de gaz d'échappement à une bride de montage et son procédé de fabrication

(30) Priorität: 20.11.1996 DE 19647961
(43) Veröffentlichungstag der Anmeldung: 27.05.1998
(73) Patentinhaber: DaimlerChrysler AG, 70567 Stuttgart (DE)
(72) Erfinder: Sasse, Michael, 21149 Hamburg (DE); Schmidt, Jürgen, 21702 Ahlerstedt (DE)

(56) Entgegenhaltungen:
- CH-A- 239 430
- DE-B- 1 018 681
- FR-A- 1 418 052
- US-A- 4 832 383

## Beschreibung

Die Erfindung betrifft eine Fügeverbindung eines abgasführenden Rohres mit einem Befestigungsflansch nach dem Oberbegriff des Patentanspruches 1 und ein Verfahren zur Herstellung derselben nach dem Oberbegriff des Patentanspruches 5.

Eine gattungsgemäße Fügeverbindung bzw. ein gattungsgemäßes Herstellungsverfahren ist aus der US 4,832,383 bekannt, die einen Flansch beschreibt, der mehrere Aussparungen an seiner Oberseite besitzt. Eine obere Aussparung wird durch die Schrägkante (chamfer 22) und den Kragen (collar 26) beschrieben. Eine stufenartig eingearbeitete untere Aussparung (recess portion 18) ist als axialer Anschlag für das Rohr (pipe 10) vorgesehen, während die obere Aussparung zur Aufnahme der Schweißnaht zwischen Rohr und Flansch dient. Die Durchführung (aperture 30) wird von dem Innenumfang des Flansches gebildet, der mit der inneren Abschlußkante der unteren Aussparung (recess portion 18) identisch ist.

Des weiteren ist aus der DE 39 15 346 A1 eine Verbindung entnehmbar, bei der zur Entlastung der späteren Schweißnaht zum einen das einzusteckende Rohrende aufgeweitet und anschließend verjüngt ist, wobei das Rohrende eine Keilform annimmt. Zum anderen wird am Befestigungsflansch eine entsprechende formäquivalente Ansenkung geschaffen, so daß das Rohr einerseits durch die Zentrierung in einfacher Weise in den Flansch eingeführt werden kann und andererseits beim weiteren Einschieben durch die aufgrund der Form des Rohrendes entstehende Keilwirkung ein Preßsitz des Rohres im Flansch erreicht werden kann. Die geschilderte Ausbildung der Steckpartner (Flansch - Rohr) bedarf erheblichen fertigungstechnischen Aufwand und ist dadurch sehr kostenintensiv. Des weiteren ist bei der bekannten Fügeverbindung eine Automatisierung der Herstellung, die beispielsweise einen Schweißroboter beinhaltet, aufgrund der sich in axialer Richtung auswirkenden Fertigungstoleranzen des Rohres praktisch unmöglich. Der Schweißroboter schweißt bei jedem zu fügenden Teil immer an derselben Stelle innerhalb des Flansches. Ist das Rohrende in der Stecklage des Rohres tiefer als gewünscht im Flansch positioniert, so schweißt der Roboter auf die Innenseite des Rohres, wodurch sich keine Schweißverbindung zwischen Rohr und Flansch ergibt. Ist das Rohrende höher als gewünscht im Flansch positioniert, schweißt der Roboter auf den Flansch, wodurch sich ebenfalls keine Schweißverbindung der Steckpartner ergibt. Zwischen diesen extremen Relativlagen sind viele Axialstellungen des Rohrendes bezüglich des Flansches möglich, welche jedoch nur sehr unzufriedenstellende, d.h. qualitativ schlechte Schweißverbindungen ermöglichen. Eine Verschweißung in der optimalen Lage tritt angesichts der vielen möglichen Lageabweichungen nicht häufig auf, so daß bei einer automatisierten Fertigung mit einer hohen Ausschußrate zu rechnen ist. Dies macht eine Automatisierung kostenungünstig, da die Qualitätskontrolle der Verbindung nach ihrer Herstellung einen maßgeblichen Stellenwert einnimmt.

Der Erfindung liegt die Aufgabe zugrunde, eine gattungsgemäße Fügeverbindung bzw. ein gattungsgemäßes Verfahren zu deren Herstellung dahingehend weiterzubilden, daß in einfacher Weise eine prozeßsichere Automatisierbarkeit der Herstellung der Fügeverbindung ermöglicht werden kann.

Die Aufgabe ist erfindungsgemäß durch die Merkmale des Patentanspruches 1 hinsichtlich der Fügeverbindung und durch die Merkmale des Patentanspruches 5 hinsichtlich des Verfahrens gelöst.

Dank der Erfindung wird durch den Abstützvorsprung ein axial definiert liegender Anschlag für das einzusteckende Abgasrohr geschaffen. Dadurch liegen in der Massenproduktion alle Abgasrohre in dem ihnen zugeordneten Flansch unabhängig von axialen Fertigungstoleranzen gleich. Aufgrund der Gleichlage kann der auf eine bestimmte Stelle im Flansch, nämlich des Bereiches der Anlage des Rohres am Abstützvorsprung, programmierte Schweißroboter eine für alle Zusammenbauteile gleiche Schweißverbindung hoher Haltbarkeit erzeugen. Dabei schweißt der Roboter durch die Gleichlage immer an der für eine optimale Schweißverbindung richtigen Stelle. Der Abstützvorsprung ist in einfacher Weise am Flansch anzubringen, so daß insgesamt die Herstellung der gewünschten Fügeverbindung mit sehr geringem Aufwand erfolgen kann. Besondere Ausbildungen von Flansch und Rohr, die gar zusätzlich aufeinander abgestimmt sein müssen, entfallen. Für das Erhalten einer qualitativ genügenden Schweißnaht und damit für eine ausreichende Verschweißung ist es unerläßlich, daß in der Stecklage der beiden Steckpartner Rohr-Flansch die Rohrinnenseite die Abschlußkante des Abstützvorsprungs nach innen etwas überragt, zumindest jedoch bündig mit dieser abschließt. Dadurch erreicht der Schweißroboter auf jeden Fall ohne Umstände die Stelle des Übergangs zwischen dem Öffnungsrand und der Abschlußkante des Abstützvorsprunges und kann dort die Schweißnaht (Kehlnaht) anbringen. Infolge der in der Produktion durchgehend erfolgreichen Erzeugung einer qualitativ hochwertigen Fügeverbindung wird ein Ausschuß von minderwertig gefügten Zusammenbauteilen verhindert. Somit ist die Prozeßsicherheit bei einer Automatisierung der Herstellung der Fügeverbindung gewährleistet.

Zweckmäßige Ausgestaltungen der Erfindung können den Unteransprüchen entnommen werden; im übrigen ist die Erfindung anhand eines in den Zeichnungen dargestellten Ausführungsbeispieles nachfolgend näher erläutert; dabei zeigt:
Fig. 1 in einem seitlichen Längsschnitt die erfindungsgemäße Fügeverbindung an einem Zylinderkopfabschnitt,
Fig. 2 in einem seitlichen Längsschnitt einen Flansch der erfindungsgemäßen Fügeverbindung bei der Herstellung eines Abstützvorsprunges.

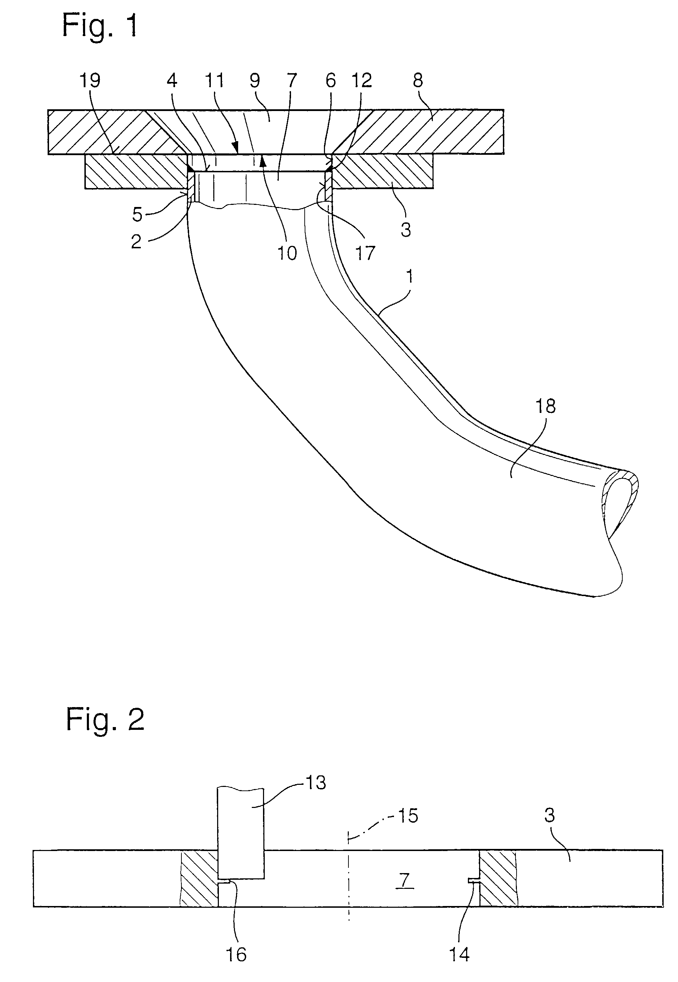

In Fig. 1 ist ein Abschnitt eines als 90°-Rohrbogen ausgebildeten Abgasrohres 1 dargestellt, das mit einem Ende 2 an einem flachen Befestigungsflansch 3 angebracht ist. Das Rohrende 2 weist seinen Öffnungsrand 4 innerhalb des Flansches 3 auf und liegt mit seiner Außenseite 5 umfänglich im wesentlichen vollständig an einer glattzylindrischen Wandung 6 einer im Flansch 3 angeordneten Durchführung 7 an. Der Flansch 3 und das Abgasrohr 1 bilden ein Zusammenbauteil, das an einem Zylinderkopf 8 einer Brennkraftmaschine beispielsweise mittels einer Schraubverbindung oder einer Schweißverbindung befestigt ist. Hierbei sind das Zusammenbauteil und der Zylinderkopf 8 derart zueinander angeordnet, daß ein Abgasaustritt 9 des Zylinderkopfes 8 sich mit seiner Austrittsöffnung 10 direkt an eine Eintrittsöffnung 11 der Durchführung 7 des Flansches 3 anschließt, wobei die Ränder der Öffnungen 10, 11 miteinander fluchten. Das Abgasrohr 1 ist am Öffnungsrand 4 seines Rohrendes 2 mit dem Flansch 3 unter Ausbildung einer umlaufenden Kehlnaht 12 unmittelbar verschweißt. Das Abgasrohr 1 kann stellvertretend für mehrere einzelne Abgasrohre stehen, die mit ihren Rohrenden in der jeweiligen Durchführung von einzelnen Befestigungsflanschen angeordnet und mit diesen fest verbunden sind. Ebenso ist es möglich, mehrere einzelne Abgasrohre in Durchführungen eines gemeinsamen flachen bzw. ebenen Befestigungsflansches anzuordnen und an diesem mit ihren Rohrenden unmittelbar zu befestigen.

Als Anwendung für das Zusammenbauteil ist auch denkbar, dieses an der Eintrittsseite des Zylinderkopfes 8 vorzusehen, wobei das Abgasrohr 1 ein Ansaugrohr der Frischluftansaugung der Brennkraftmaschine bildet. Das im Vergleich zur Abgasseite des Zylinderkopfes 8 mit niedrigen Temperaturen beaufschlagte Zusammenbauteil kann dann auch am Zylinderkopf 8 angeklebt sein.

Der Flansch 3 kann ein Gußteil, ein gesintertes oder geschmiedetes Bauteil oder aber - was bei ebenen, flachen Flanschen von Fertigungsseite her am wenigsten Aufwand und die geringsten Kosten bereitet - ein Stanzteil, insbesondere ein Feinschneidteil sein. Mit Ausstanzen der Flanschkonturen werden gleichzeitig auch die Durchführungen 7 gestanzt, bzw. feingeschnitten. Zur Herstellung der Fügeverbindung zwischen dem Abgasrohr 1 und dem Flansch 3 wird im Nachgang zur Flanschfertigung mittels eines Stempels 13 an der Durchführungswandung 6 entlang in axialer Richtung bis zu einer vorher festgelegten Tiefe innerhalb des Flansches 3 Wandungsmaterial abgeschabt. Das abgeschabte Wandungsmaterial steht danach als dünner Schabspan in den lichten Querschnitt der Durchführung 7 hinein und bildet dabei einen Abstützvorsprung 14 für das Abgasrohr 1. Das Herstellen des Abstützvorprunges 14 kann in einer von der eigentlichen Fertigungslinie separierten Arbeitsstation parallel zu den üblichen Montage- oder Fertigungsschritten erfolgen, so daß es zu keiner kostenträchtigen Verlängerung der Taktzeit kommt.

Der Stempel 13 kann ein zum Stanzstempel separater Stempel - wie im Ausführungsbeispiel der Fig. 2 gezeigt - oder der Stanzstempel selbst sein, wobei in letzterem Falle der Stanzstempel beispielsweise für die Ausbildung des Abstützvorsprunges 14 zumindest eine radial verfahrbare Schabnase besitzt, die in einem zum Stanzvorgang neuerlichen Absenken des Stanzstempels ausgefahren wird. Alternativ ist ein aus zwei Stempeln kombinierter Stempel denkbar wobei die Stempel konzentrisch zueinander angeordnet und aneinander verschiebbar geführt sind. Der innere Stempel weist die Funktion des Stanzstempels auf, der als erster zur Herstellung der Durchführung 7 den Flansch 3 beaufschlagt. Nach Zurückziehen des Stanzstempels wird anschließend unter Beibehaltung der axialen Lage der äußere, die Schabfunktion beinhaltende Stempel auf den Flansch 3 abgesenkt, wodurch der Abstützvorsprung 14 erzeugt wird. Bei der Funktionsintegrierung des Stanzens und der Bildung eines Abstützvorsprunges 14 in einen Stempel hinein entfällt eine separate Arbeitssation und die dafür aufzubringenden Kosten. Um jedoch die Taktzeit des Produktionsablaufes einzuhalten, sind die aufeinanderfolgenden Schritte Stanzen der Flanschkontur und Durchführung(en) 7 und anschließendes Ausbilden des Abstützvorsprunges 14 in der gleichen Zeit auszuführen wie im Falle einer für das Ausbilden des Abstützvorsprunges 14 separaten Arbeitsstation.

Die vorher definierte Axiallage des Abstützvorsprunges 14 hängt unmittelbar von der axialen und der radialen Eindringtiefe des Stempels 13 in die Durchführungswandung 6 ab, welche entsprechend aufeinander abgestimmt sein müssen, um die erwünschte Axiallage des Vorsprunges 14 zu erhalten. Nach dem Erzeugen des Abstützvorsprunges 14 wird das Abgasrohr 1 in die Durchführung 7 des Flansches 3 so weit eingesteckt, bis der Öffnungsrand 4 des in Steckrichtung weisenden Rohrendes 2 des Abgasrohres 1 am Abstützvorsprung 14 anliegt. Das Abgasrohr 1 besitzt nun relativ zum Flansch 3 eine definierte Axiallage, die nun aufgrund des immer an der gleichen Stelle sitzenden Vorsprunges 14 für alle Steckverbindungen, d.h. Zusammenbauteile gleich ist.

Der Abstützvorsprung 14 ist derart ausgebildet, daß seine radial zur Achse 15 der Durchführung 7 weisende Abschlußkante 16 höchstens bündig mit der Innenwandung 17 des Abgasrohres 1 abschließt. Im Regelfall überragt diese die Abschlußkante 16 erheblich. Prinzipiell ist es ausreichend, einen einzigen nasenförmigen Abstützvorsprung 14 an der Wandung 6 der Durchführung 7 des Flansches 3 vorzusehen. Jedoch ist die Lage des Rohrendes 2 in der Durchführung 7 kippstabiler, wenn zumindest - wie gezeigt - zwei Abstützvorsprünge 14 ausgebildet werden, die einander diametral gegenüberliegen. Noch günstiger bezüglich der Kippstabilität des Rohrendes 2 als zwei Abstützvorsprünge 14 ist die Anordnung von drei Vorsprüngen 14, die in Umfangsrichtung der Durchführungswandung 6 um jeweils 120° voneinander versetzt ausgebildet sind.

Alternativ zur schabenden Erzeugung des Abstützvorsprunges 14 kann dieser auch durch gezieltes, zum zu erzeugenden Vorsprung 14 hin gerichtetes Aufstauchen des Wandungsmateriales der Durchführungswandung 6 unmittelbar oberhalb der für den Vorsprung 14 vorgesehenen Stelle ausgebildet werden. Des weiteren ist es denkbar, den Abstützvorsprung 14 in Form eines Noppens an der Durchführungswandung 6 beispielsweise mittels der Spritzgußtechnik durch Angießen anzuformen. Bei Guß-, Sinter- und Schmiedeteilen als Flansch 3 ist es sinnvoll, wenn auch mit einigem Bearbeitungsaufwand verbunden den Abstützvorsprung 14 aus der Durchführungswandung 6 herauszufräsen. Ebenso ist es beim Herstellen des Flansches 3 in Form eines Gußteils verfahrensökonomisch praktisch, den Abstützvorsprung 14 gleichzeitig mitzugießen. Weiterhin ist es denkbar, den Abstützvorsprung 14 als gesondertes Bauteil an der Durchführungswandung 6 anzukleben.

Nach den Einstecken des Abgasrohres 1 in den Befestigungsflansch 3 wird das Abgasrohr 1 in der Anlagestellung am Abstützvorsprung 14 und der Flansch 3 eingespannt. Die Einspannung erfolgt bezogen auf den Befestigungsflansch 3 in axialer Richtung beispielsweise mittels eines Handspanners oder auch Kniehebelspanners, wobei das Abgasrohr 1 an einem Rohrabschnitt 18, der im wesentlichen parallel zum Flansch 3 liegt, gehalten und gegen den Abstützvorsprung 14 gedrückt wird. Das Gegenlager der Einspannung befindet sich auf der dem Abgasrohr 1 abgewandten Seite 19 des Befestigungsflansches 3. In eingespanntem Zustand wird das Zusammenbauteil auf einem Drehtisch zur Bearbeitungsstation eines Schweißroboters geschwenkt. Aufgrund der axialen Einspannung und der festen Anlage der Steckpartner aneinander ergeben sich keine Änderungen der Relativlage zueinander durch die beim Schwenken auftretenden Fliehkräfte.

Der Schweißroboter fährt vorprogrammiert an die Fügestelle im Bereich der Anlage des Öffnungsrandes 4 des Rohrendes 2 am Abstützvorsprung 14 und schweißt beispielsweise durch Lichtbogen, Laser- oder Elektronenstrahlschweißen eine umlaufende Kehlnaht 12. Dieser wird dabei zugeschweißt, so daß eine haltbare belastungsfähige Verbindung zwischen dem Abgasrohr 1 und dem Befestigungsflansch 3 erzielt wird. Natürlich ist es auch denkbar, daß das Abgasrohr 1 nur am Abstützvorsprung 14 angeschweißt wird. Dies ist jedoch je nach Erzeugung des Vorsprunges 14 bezüglich der Haltbarkeit der Kehlnaht 12 durch den etwaigen unzureichenden Einbrand eventuell nachteilig. Um eine hohe Qualität der Naht 12 zu erreichen, ist es besonders günstig, den Abstützvorsprung 14 beim Anschweißvorgang des Rohres 1 im entstehenden Schmelzbad aufzulösen, wodurch das Abgasrohr 1 quasi unmittelbar an der Durchführungswandung 6 angeschweißt wird.

Insgesamt ist die Fügeverbindung bei allen Anwendungen einsetzbar, bei denen Rohre an Flanschen angebracht werden, nachdem sie in deren Durchführung eingesteckt wurden, insbesondere bei Abgaskrümmern, bei denen eine sichere Einspannung zur Herstellung der Schweißverbindung ohne die zueinander positionierten Steckpartner in ihrer Relativlage zu verändern aufgrund der relativ stark gebogen verlaufenden Rohre sehr schwierig auszuführen ist. Es sei hier noch einmal explizit angemerkt, daß der große Vorteil des erfindungsgemäße Herstellungsverfahrens in der hohen Reproduzierbarkeit der Fügeverbindung und der quasi nicht vorhandenen Ausschußrate des Zusammenbauteils liegt.

## Patentansprüche

1. Fügeverbindung zumindest eines einzelnen abgasführenden Rohres (1) einer Brennkraftmaschine mit einem Befestigungsflansch (3), das in dessen Durchführung (7) eingesteckt und an seinem innerhalb der Durchführung (7) liegenden Öffnungsrand (4) mit der Durchführungswandung (6) des Flansches (3) verschweißt ist, wobei daß an er Durchführungswandung (6) ein in die Durchführung (7) radial einwärts hineinstehender Abstützvorsprung (14) axial lagedefiniert ausgebildet ist, an dem das Rohr (1) in Stecklage in axialer Richtung unmittelbar anliegt, wobei die Rohrinnenwandung (17) mit der Abschlußkante (16) des Vorsprunges (14) zumindest bündig abschließt,
**dadurch gekennzeichnet,**
daß der zumindest eine Abstützvorsprung (14) auf eine Stelle der Wandung (6) axial und in Umfangsrichtung begrenzt ist und daß der Öffnungsrand (4) des Rohrendes (2) stirnseitig mit der Durchführungswandung (6) unter Ausbildung einer umlaufenden Kehlnaht (12) verschweißt ist.

2. Fügeverbindung nach Anspruch 1,
**dadurch gekennzeichnet,**
daß zwei Vorsprünge (14) an der Durchführungswandung (6) ausgebildet sind, die sich diametral gegenüberliegen.

3. Fügeverbindung nach Anspruch 1,
**dadurch gekennzeichnet,**
daß der Abstützvorsprung (14) von einem durch Schaben der Durchführungswandung (6) erzeugten an dieser anhängenden Span gebildet ist.

4. Fügeverbindung nach Anspruch 1,
**dadurch gekennzeichnet,**
daß der Abstützvorsprung (14) noppenartig ausgebildet ist.

5. Verfahren zur Herstellung einer Fügeverbindung nach Anspruch 1, wobei nach dem Herstellen des Flansches (3) und seiner Durchführung (7) ein abgasführendes Rohr (1) in die Durchführung (7) positionierend gesteckt wird und an seinem in der Durchführung (7) liegenden Öffnungsrand (4) mit der Durchführungswandung (6) verschweißt wird, wobei vor dem Einstecken des Rohres (1) in den Flansch (3) innerhalb der Durchführung (7) an der Durchführungswandung (6) ein in die Durchführung (6) radial einwärts hineinragender Abstützvorsprung (14) lagedefiniert erzeugt wird, wonach das Rohr (1) in den Flansch (3) so weit eingesteckt wird, bis dessen Öffnungsrand (4) am Abstützvorsprung (14) zur Anlage kommt, wobei bei der Erzeugung der Vorsprung (14) derart ausgebildet wird, daß die Rohrinnenwandung (17) mit seiner innenliegenden Abschlußkante (16) zumindest bündig abschließt,
**dadurch gekennzeichnet,**
daß der zumindest eine Abstützvorsprung (14) auf eine Stelle der Wandung (6) axial und in Umfangsrichtung begrenzt erzeugt wird und daß der Öffnungsrand (4) des Rohrendes (2) stirnseitig mit der Durchführungswandung (6) unter Ausbildung einer umlaufenden Kehlnaht (12) verschweißt wird.

6. Verfahren nach Anspruch 5,
**dadurch gekennzeichnet,**
daß zum Verschweißen des Rohres (1) mit dem Flansch (3) das Rohr (1) eingespannt wird.

7. Verfahren nach Anspruch 5,
**dadurch gekennzeichnet,**
daß der Abstützvorsprung (14) an der Durchführungswandung (6) angeformt wird.

8. Verfahren nach Anspruch 5,
**dadurch gekennzeichnet,**
daß der Abstützvorsprung (14) durch Aufstauchen der Durchführungswandung (6) an vorbestimmter Stelle hergestellt wird.

9. Verfahren nach Anspruch 5,
**dadurch gekennzeichnet,**
daß der Abstützvorsprung (14) durch gezieltes, punktuelles in axialer Richtung erfolgendes Schaben der Durchführungswandung (6) in der Form eines Schabspanes erzeugt wird.

10. Verfahren nach Anspruch 5,
**dadurch gekennzeichnet,**
daß der Abstützvorsprung (14) aus der Durchführungswandung (6) herausgefräst wird.

11. Verfahren nach Anspruch 5,
**dadurch gekennzeichnet,**
daß beim Herstellen des Flansches (3) als Gußteil der Abstützvorsprung (14) gleichzeitig mitgegossen wird.

12. Verfahren nach Anspruch 5,
**dadurch gekennzeichnet,**
daß beim Anschweißvorgang des Rohres (1) an der Durchführungswandung (6) der Abstützvorsprung (14) zugeschweißt wird.

13. Verfahren nach Anspruch 5,
**dadurch gekennzeichnet,**
daß beim Anschweißvorgang des Rohres (1) der Abstützvorsprung (14) im entstehenden Schmelzbad aufgelöst wird.

## Claims

1. Connection member for at least a single exhaust pipe (1), of an internal combustion engine, with an attachment flange (3), the exhaust pipe being inserted into its bushing (7) and welded, on the rim (4) of its opening, which lies inside the bushing (7), to the surface (6) of the bushing of the flange (3), whereby a radially, inwardly extending support-projection (14) is axially developed on the inner surface (6) of the bushing, the pipe (1), when inserted, lying directly on the said projection, in an axial direction, whereby the inner surface (17) of the pipe lies at least flush against the abutment edge (16) of the projection (14),
characterized in that
the at least single support-projection (14) is limited, axially and in a peripheral direction, to one position on the surface (6), and in that the edge (4), of the opening of the end (2) of the pipe, is welded to the surface (6) of a bushing, with the development of a peripheral fillet weld (12).

2. Connection member in accordance with the claim 1,
characterized in that
two projections (14) are developed on the inner surface (6) of the bushing, these projections lying diametrically opposite each other.

3. Connection member in accordance with claim 1,
characterized in that
the support-projection (14) is formed by a cutting, produced by paring the inner surface (6) of the bushing, joined to the said surface.

4. Connection member in accordance with claim 1,
characterized in that
the support-projection (14) is developed in the form of a knub.

5. Process for producing a connection member in accordance with claim 1, whereby, after the production of the flange (3) and its bushing (7), an exhaust pipe (1) is positioned in the bushing (7) and is welded, into the bushing, on its opening rim (4) which lies in the bushing (7), whereby a positionally defined and inwardly extending support-projection (14) is produced on the inner surface of the bushing (6), before the insertion of the pipe (1) into the flange (3) in the bushing (7), whereupon the pipe (1) is inserted into the flange (3) until its opening rim (4) comes to lie against the support projection (14), whereby the projection (14) is produced such that the inner surface (17) of the pipe lies at least flush against the inner side (16) of the projection,
characterized in that
the at least single support-projection (14) is limited, axially and in a peripheral direction, to one position on the surface (6), and in that the edge (4), of the opening of the end (2) of the pipe, is welded to the surface (6) of a bushing, with the development of a peripheral fillet weld (12).

6. Process in accordance with claim 5,
characterized in that
the pipe (1) is clamped in order to weld it to the flange (3).

7. Process in accordance with claim 5,
characterized in that
the support-projection (14) is formed on the inner surface (6) of the bushing.

8. Process in accordance with claim 5,
characterized in that
the support-projection (14) is produced by welding the inner surface (6) of the bushing short and thick, at a particular point.

9. Process in accordance with claim 5,
characterized in that
the support-projection (14) is produced by specifically located, paring of the surface (6) of the bushing, in an axial direction.

10. Process in accordance with claim 5,
characterized in that
the support-projection (14) is milled out from the inner surface (6) of the bushing.

11. Process in accordance with claim 5,
characterized in that
the support-projection (14) is cast at the same time as the production of the flange (3).

12. Process in accordance with claim 5,
characterized in that
a support-projection (14) is welded on at the time of welding a pipe (1) to the inner surface (6) of a bushing.

13. Process in accordance with claim 5,
characterized in that
a support-projection (14) is melted in a molten bath pool during a process of welding on a pipe (1).

## Revendications

1. Liaison par joint d'au moins un tube (1) individuel, guidant des gaz d'échappement, d'un moteur à combustion interne, à une bride de fixation (3), tube s'enfichant dans son passage (7) et étant soudé, sur son bord d'ouverture (4) placé à l'intérieur du passage (7), à la paroi de passage (6) de la bride (3), sur la paroi de passage (6) étant réalisée, de façon définie en position axiale, une saillie d'appui (14) pénétrant radialement vers l'intérieur dans le passage (7), saillie sur laquelle le tube (1) appuie directement en direction axiale lorsqu'il est en position enfiçhée, la paroi intérieure de tube (17) se délimitant, au moins de façon affleurée, avec la paroi de délimitation (16) de la saillie (1),
caractérisée en ce que la au moins une saille d'appui (14) est limitée, en direction axiale et périphrique, à un emplacement de la paroi (6), et en ce que le bord d'ouverture (4) de l'extrémité de tube (2) est soudé, du côtré frontal, à la paroi de passage (6), en constituant une soudure d'angle concave ou à congé (12) de pourtour.

2. Liaison par joint selon la revendication 1, caractérisée en ce que deux saillies (14) sont réalisées dans la paroi de passage (6), en étant diamétralement opposées.

3. Liaison par joint selon la revendication 1, caractérisée en ce que la saillie d'appui (14) est constituée par un copeau ou appendice d'usinage produit par raclage-rabotage de la paroi de passage (6) et restant accroché à celle-ci.

4. Liaison par joint selon la revendication 1, caractérisée en ce que la saillie d'appui (14) est réalisée en forme de téton.

5. Procédé de fabrication de liaison par joint selon la revendication 1, où, après fabrication de la bride (3) et de son passage (7), un tube (1) de guidage des gaz d'échappement est enfiché avec effet de positionnement dans le passage (7) et est soudé à la paroi de passage (6) au niveau de son bord d'ouverture (4) situé dans le passage (7), où, avant l'enfichage du tube (2) dans la bride (3), à l'intérieur du passage (7), sur la paroi de passage (6) est générée, de façon définie en position, une saillie d'appui (14) pénétrant radialement vers l'intérieur dans le passage (7), à la suite de quoi le tube (1) est enfiché dans la bride (3), d'une distance telle que son bord d'ouverture (4) vient en appui sur la saillie d'appui (14), où, lors de la formation, la saillie (14) est réalisée de manière que la paroi intérieure de tube (17) vient s'aligner au moins en affleurement avec son arête de limite (16) intérieure, caractérisée en ce que la au moins une saillie d'appui (14) est générée, de façon limitée axialement et en direction périphérique, en un emplacement de la paroi (6), et en ce que le bord d'ouverture (4) de l'extrémité de tube (2) est soudé, côté frontal, à la paroi de passage (6), en constituant une soudure d'angle concave ou à congé (12) faisant le pourtour.

6. Procédé selon la revendication 5, caractérisé en ce que le tube (1) est enserré, pour effectuer le soudage du tube (1) à la bride (3).

7. Procédé selon la revendication 5, caractérisé en ce que la saillie d'appui (14) est formée d'un seul tenant sur la paroi de passage (6).

8. Procédé selon la revendication 5, caractérisé en ce que la saillie d'appui (14) est fabriquée, en un emplacement prédéterminé, par constitution d'un relief par refoulement de la paroi de passage (6).

9. Procédé selon la revendication 5, caractérisé en ce que la saillie d'appui (14) est produite par un raclage-rabotage, effectué à dessein, ponctuel, en direction axiale, de la paroi de passage (6), sous la forme d'un copeau ou appendice de raclage.

10. Procédé selon la revendication 5, caractérisé en ce que la saillie d'appui (14) est produite par découpage par fraisage, à partir de la paroi de passage (6).

11. Procédé selon la revendication 5, caractérisé en ce que lors de la fabrication de la bride (3) en pièce moulée, la saillie d'appui (14) est obtenue de coulée, conjointement et simultanément.

12. Procédé selon la revendication 5, caractérisé en ce que, lors du processus de raccordement par soudage du tube (1) à la paroi de passage (6), la saillie d'appui (14) est soudée conjointement.

13. Procédé selon la revendication 5, caractérisé en ce que la saillie d'appui (14) est mise en solution dans le bain de masse fondue constitué, lors du processus de liaison par soudage du tube (1).
